# FASCICULE DE BREVET EUROPEEN

(11) **EP 0 876 184 B1**
(45) Date de publication et mention de la délivrance du brevet: **13.02.2002**
(21) Numéro de dépôt: 96937398.4
(22) Date de dépôt: 06.11.1996
(51) Int. Cl.: B01D 11/04, B01D 17/02

(54) **PROCEDE ET INSTALLATION DE MELANGE-SEPARATION DE DEUX LIQUIDES NON MISCIBLES**
VERFAHREN UND ANLAGE ZUM MISCHEN UND TRENNEN VON ZWEI NICHT MISCHBAHREN FLÜSSIGKEITEN
METHOD AND APPARATUS FOR MIXING/SEPARATING TWO NON-MISCIBLE LIQUIDS

(30) Priorité: 07.11.1995 FR 9513138
(43) Date de publication de la demande: 11.11.1998
(73) Titulaire: KREBS & Cie S.A., 78100 Montigny-le-Bretonneux (FR)
(72) Inventeur: PERRET, Jean-Claude, F-78160 Marly-le-Roi (FR); SONNTAG, Alain, F-78310 Maurepas (FR); GOODMAN, David, Menco Parc, CA 94025 (US)
(74) Mandataire: Lanceplaine, Jean-Claude
(86) Numéro de dépôt international: FR9601739
(87) Numéro de publication internationale: WO9717121

(56) Documents cités:
- BE-A- 570 929
- DE-A- 2 710 241

## Description

La présente invention a pour objets un procédé de mélange-séparation de deux liquides non miscibles, de densité différente ainsi que le dispositif associé audit procédé Un tel dispositif peut être qualifié d'installation de mélange-séparation ou d'appareil mélangeur-décanteur. On met en oeuvre en son sein des extractions liquide-liquide.

Selon sa variante de réalisation préférée, la présente invention se situe dans le contexte du mélange-séparation de deux liquides, mis en oeuvre dans un appareil mélangeur-décanteur du type à courant de liquide inversé [l'alimentation du décanteur s'effectue par l'extrémité du décanteur (dite extrémité d'alimentation) qui se trouve la plus éloignée du mélangeur] et à goulotte superposée (lesdits mélangeur et décanteur sont reliés par une goulotte disposée au-dessus dudit décanteur).

On précise quelque peu ci-après le domaine technique auquel se rapporte l'invention.

On sait que le procédé de mélange-séparation consiste à produire une dispersion suffisamment fine des deux liquides non miscibles l'un dans l'autre pour faciliter les échanges, puis à séparer à nouveau les deux liquides non miscibles par décantation (une telle séparation par décantation est possible dans la mesure où lesdits deux liquides ne présentent pas la même densité). Généralement, un des liquides est constitué par une solution impure d'un produit déterminé, tandis que l'autre liquide est un solvant organique servant soit de solvant spécifique du produit considéré, soit de support de dilution pour un échangeur d'ions spécifique du produit considéré. L'installation complète comporte habituellement une batterie d'extraction formée par la juxtaposition d'un certain nombre de mélangeurs-décanteurs dans lesquels la solution impure du produit considéré circule à contre-courant du liquide organique, puis une batterie de réextraction d'un type identique et dans laquelle le liquide organique circule à contre-courant d'une solution pure recueillant le produit, ce qui permet audit liquide organique d'être utilisé en circuit fermé.

Chaque mélangeur-décanteur de la batterie comporte essentiellement un mélangeur recevant les deux produits liquides, généralement à sa base, et produisant par agitation le mélange (la dispersion) recherché(e), puis une cuve de décantation dans laquelle ledit mélange circule lentement et se scinde progressivement en raison même de la non-miscibilité des liquides et de la non-stabilité de la dispersion. Il est clair que, pour un débit donné, l'encombrement de chaque mélangeur dépend du temps de séjour de la dispersion avant son passage à la décantation, ce temps dépendant de l'efficacité des échanges qui augmente avec la finesse de la dispersion. De son côté, l'encombrement de chaque décanteur dépend également du temps de séjour de la dispersion qui le traverse, ce temps étant fonction de la vitesse de coalescence de la dispersion qui diminue au contraire lorsqu'on augmente la finesse de la dispersion. En conséquence, il existe toujours une taille optimum pour les gouttelettes de la dispersion qui procure l'encombrement, donc le prix minimum pour l'ensemble de l'installation.

Les liquides et mélanges de liquides sont généralement véhiculés dans l'installation au moyen de pompes ou de pompes-agitateurs.

Des procédés de mélange-séparation et leur dispositif associé ont été décrits, notamment dans les documents DE-A-2 710 241 (ou US-A-4, 235, 602) et EP-A-0 252 785.

Le dispositif décrit dans le brevet US-A-4, 235, 602 est un mélangeur-décanteur du type à courant de liquide inversé et à goulotte superposée.

Le dispositif décrit dans la demande EP-A-0 252 785 est un mélangeur-décanteur du type à courant de liquide inversé et à goulotte noyée.

Dans le document BE-A-570 929, il est décrit un dispositif qui comporte trois compartiments :
- un premier compartiment de décantation d'un mélange huile/eau ;
- deux compartiments de collecte, pour la collecte de l'huile d'une part et de l'eau d'autre part.

Lesdits compartiments ne constituent pas, respectivement, un dispositif de pré-décantation ou pré-séparation et des unités ou compartiments séparés de décantation au sens de l'invention (voir ci-après).

Un mélangeur-décanteur selon l'art antérieur est schématisé sur la figure 1. Il s'agit d'un mélangeur-décanteur du type décrit dans le brevet US-A-4, 235, 602, à savoir du type à courant de liquide inversé et à goulotte superposée. Ledit mélangeur-décanteur constitue avantageusement un étage d'une batterie d'extraction-réextraction.

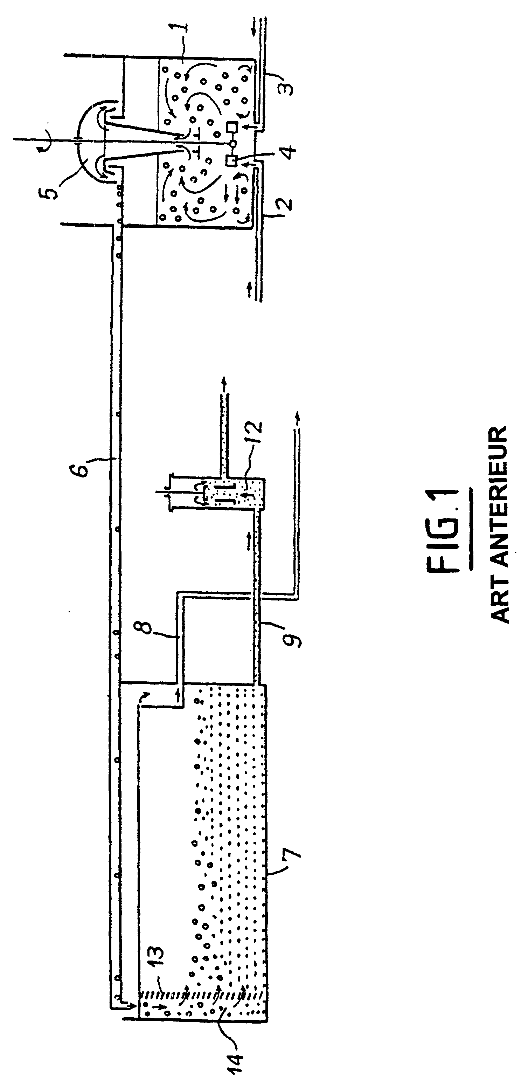

Sur ladite figure 1, on a représenté :
- en 1, le mélangeur qui comporte notamment des arrivées séparées de liquides 2 et 3;
- en 5, une pompe qui assure l'élévation jusqu'à un niveau convenable du mélange (ou de la dispersion) réalisé(e) dans ledit mélangeur 1 grâce aux moyens d'agitation 4 ;
- en 6, une goulotte qui assure le transport (ou acheminement) du mélange de liquide sortant de la pompe 5 jusqu'à l'entrée dans la cuve de décantation 7 dans laquelle les deux liquides en s'écoulant à faible vitesse se séparent progressivement pour donner naissance d'une part à une phase légère (généralement organique) qui est évacuée en 8 et d'autre part à une phase lourde (généralement aqueuse) qui est évacuée en 9;
- en 12, un régulateur d'interphase.

La pompe 5 représentée est du type pompe à cône (telle que décrite dans la demande FR-A-2 343 905 et reprise dans le brevet US-A-4, 235, 602). Son intervention est particulièrement avantageuse dans la mesure où elle n'introduit pas d'agitation supplémentaire et où, au contraire, en son sein, s'amorce une certaine coalescence, sous l'effet de la force centrifuge dans une veine conique s'écoulant sans turbulence.

Dans un tel dispositif, les liquides, à l'extrémité de la goulotte 6, la plus éloignée du mélangeur 1, i.e à l'extrémité d'alimentation de la cuve de décantation 7, ont déjà subi une pré-séparation ou pré-décantation (amorcée dans la pompe à cône 5 et qui s'est développée lors de la progression lente de ceux-ci dans la goulotte 6).

Pour bénéficier de cette pré-séparation, éviter, tout au moins limiter, un remélange desdits liquides pré-séparés lors de leur transfert de la goulotte 6 à la cuve de décantation 7, on prévoit avantageusement des moyens, à ladite extrémité de la goulotte 6 (tels que des déversoirs indépendants, à différents niveaux, sur toute la largeur de ladite goulotte 6 ...) et/ou à l'entrée de la cuve de décantation 7. On a montré sur la figure 1, une grille 13 s'étendant sur toute la largeur et sur toute la hauteur de ladite cuve 7. Cette grille 13 constitue un répartiteur au sein de ladite cuve 7 et génère en son extrémité la plus éloignée du mélangeur 1, un compartiment 14. Cette grille 13 est formée par des éléments de paroi parallèles et sensiblement horizontaux ou de préférence inclinés dans le sens qui favorise la coalescence et la retenue de la phase discontinue, selon que celle-ci est plus dense ou moins dense que la phase continue.

La Demanderesse a mis en oeuvre, sur de nombreux sites de par le monde, dans ce type de mélangeur-décanteur, des procédés d'extraction divers, notamment pour la récupération de métaux. Elle propose présentement un perfectionnement à cette technologie, perfectionnement selon lequel on tire au maximum profit d'une quelconque pré-séparation ou pré-décantation des liquides mélangés à séparer, opérée avant leur arrivée dans le décanteur. Ledit perfectionnement peut également être développé dans le cadre de technologies voisines; ce que comprendra aisément l'homme du métier.

Le procédé, premier objet de la présente invention, consiste donc en un procédé de mélange-séparation de deux liquides tel que défini dans la revendication 1.

Comme indiqué plus haut dans le présent texte, le procédé de l'invention apporte un perfectionnement au procédé de l'art antérieur. Ledit perfectionnement se situe au niveau de la mise en oeuvre de l'étape de séparation ou décantation. Cette étape est, de façon caractéristique, mise en oeuvre, en parallèle, sur les deux fractions pré-séparées qui ne sont pas remises en contact au sein du dispositif de décantation.

Ces deux fractions, enrichies respectivement en l'un et l'autre des deux liquides intervenants, se constituent lors du transfert ou acheminement du mélange (de la dispersion) du mélangeur vers le dispositif de décantation. Elles ont avantageusement commencé à se constituer au sein des moyens de pompage, lorsque de tels moyens interviennent.

Dans le cadre de la présente invention, la décantation est mise en oeuvre sur chacune desdites fractions, de façon classique, mais ce, de façon indépendante, après une récupération séparée. A l'issue de chacune des décantations, mises en oeuvre "en parallèle", on récupère une phase principale et une phase secondaire. On peut éventuellement alors réunir les phases principale et secondaire correspondantes.

Avantageusement, dans le cadre du procédé de l'invention, on peut régler le niveau de l'interphase entre les fractions pré-décantées, avant leur traitement dans le dispositif de décantation. A cette fin, on fait intervenir les moyens adéquats généralement au niveau de l'alimentation dudit dispositif de décantation, à l'extrémité des moyens de transfert du mélangeur vers ledit dispositif de décantation.

Pour un traitement séparé des fractions pré-décantées ou pré-séparées, celles-ci sont récupérées dans des unités ou compartiments séparés dudit dispositif de décantation. On parle, dans la présente demande, d'unités lorsque l'on a affaire à des entités "totalement indépendantes", de compartiments lorsqu'il s'agit d'entités, présentant une paroi commune. Avantageusement, pour des questions d'encombrement (et également de commodité de mise en oeuvre à partir d'un dispositif existant), la décantation est mise en oeuvre, selon l'invention, au sein d'un décanteur compartimenté i.e. séparé en deux par une paroi longitudinale.

Les compartiments ou unités du dispositif de décantation, alimentés chacun en l'une des fractions pré-décantées ou pré-séparées, ne présentent pas forcément le même volume et/ou la même géométrie (forme). On peut ainsi, selon le procédé de l'invention, privilégier la décantation dans l'un et/ou l'autre desdits compartiments ou unités de décantation. A débit égal, en augmentant le volume de l'un et/ou l'autre desdits compartiments ou unités, on augmente le temps de séjour de la fraction en son sein, et on diminue les entraînements d'une phase dans l'autre... On peut ainsi, dans le cadre de l'invention :
- fixer indépendamment le volume et/ou la forme de chacune des unités de séparation ;
   et ainsi
- privilégier la décantation dans l'un des deux compartiments d'un dispositif de décantation compartimenté. Dans cette hypothèse, ledit dispositif n'est généralement pas cloisonné en deux parties égales.

Selon l'invention, on dispose donc d'un paramètre supplémentaire pour l'optimisation de la décantation. On peut notamment jouer sur ce paramètre dans le(s) premier ou (et) dernier dispositif(s) de décantation d'une batterie de mélangeurs-décanteurs afin de récupérer l'un des liquides le plus pur possible. Généralement, on mélange une phase aqueuse et une phase organique et on souhaite récupérer une phase aqueuse la plus pure possible.

Le procédé de l'invention est basé sur le principe d'un traitement séparé, totalement indépendant, de chacune des deux fractions pré-décantées. Dans le cadre de ce traitement séparé, on peut règler avantageusement, de façon totalement indépendante, les hauteurs d'interphase. Ainsi, les deux compartiments ou unités de décantation fonctionnent-ils avec des niveaux d'interphase différents.

Celui vers lequel a été orientée la fraction enrichie en le liquide le plus lourd (phase aqueuse, par exemple) comporte "naturellement" une veine inférieure très enrichie en ledit liquide lourd, épaisse ; ladite veine inférieure étant surnagée par une veine supérieure très enrichie en le liquide plus léger (phase organique, par exemple), mince.

Celui vers lequel a été orientée la fraction enrichie en le liquide le plus léger (phase organique, par exemple) comporte "naturellement" une veine inférieure, très enrichie en le liquide lourd (phase aqueuse, par exemple) mince ; ladite veine inférieure étant surnagée par une veine supérieure, très enrichie en ledit liquide léger, plus épaisse.

Lesdites épaisseurs de chacune desdites veines sont avantageusement ajustées au moyen de dispositifs adéquats, disposés à l'intérieur ou à l'extérieur des compartiments ou unités de décantation ; dispositifs connus en eux-mêmes.

La décantation, mise en oeuvre de façon indépendante sur les fractions pré-décantées, avec avantageusement un réglage judicieux des hauteurs d'interphase au sein de chacune desdites fractions, permet de traiter respectivement des veines très enrichies en liquide lourd et très enrichies en liquide léger, de hauteurs conséquentes, au sein des compartiments ou unités du dispositif de décantation. Ceci est particulièrement avantageux dans la mesure où il est alors possible, au sein de telles veines, relativement épaisses, de mettre en oeuvre, in situ, des traitements complémentaires, pour faciliter la séparation des deux liquides.

Notamment, dans le compartiment ou unité de décantation vers lequel a été dirigée la fraction pré-décantée, enrichie en liquide lourd, on a, comme indiqué ci-dessus, une veine inférieure épaisse très enrichie en ledit liquide lourd. Avantageusement, on met en oeuvre, dans le cadre de l'invention, au sein de cette veine inférieure épaisse, un bullage de gaz (généralement par injection d'air ou injection d'un gaz inerte) qui va favoriser d'une part la séparation du liquide léger encore mélangé au liquide lourd et d'autre part la séparation des crasses, par flottation. En aval de ladite flottation, on prévoit donc avantageusement une collecte desdites crasses qui s'accumulent au niveau de l'interphase.

Selon le procédé connu par DE-A-2 710 241 (ou US-A-4 235 602) où toute la dispersion pré-décantée est traitée dans un unique décanteur, une telle flottation ne pouvait être mise en oeuvre in situ. Elle aurait trop perturbé la veine supérieure très enrichie en phase légère et d'une relative épaisseur. Une telle flottation, selon l'art antérieur, est mise en oeuvre, à l'extérieur du décanteur, sur la phase très enrichie en le liquide lourd, une fois qu'elle est sortie dudit décanteur (séparée de la phase très enrichie en le liquide léger).

De la même façon, dans le cadre de la présente invention, on peut avantageusement faire intervenir des promoteurs de coalescence. De tels promoteurs, d'un type adapté, peuvent intervenir dans chacun des compartiments ou unités de décantation, au sein de la phase majoritaire (qui constitue une veine suffisamment épaisse) . On facilite ainsi :
- la séparation des traces de liquide léger (généralement, phase organique) contenues dans la veine de liquide lourd (généralement, phase aqueuse), en disposant dans celle-ci un promoteur de coalescence adéquat (oléophile). Si l'on trouve déjà au sein de ladite veine de liquide lourd, des moyens de bullage et le cas échéant des moyens de collecte des crasses, ledit promoteur de coalescence peut être superflu. En tout état de cause, s'il intervient, il est évidemment disposé en aval desdits moyens de bullage et de collecte des crasses;
- la séparation des traces de liquide lourd (généralement, solution aqueuse) contenues dans la veine de liquide léger (généralement, phase organique), en disposant dans celle-ci un promoteur de coalescence adéquat (hydrophile).

Ainsi, dans le cadre du procédé de l'invention, le traitement de la fraction enrichie en le liquide lourd ou / et de la fraction enrichie en le liquide léger est-il avantageusement mis en oeuvre avec un promoteur de coalescence adéquat dans la veine principale (de chacun des compartiments ou unités de décantation).

A la lecture des propos ci-dessus, l'homme du métier aura déjà compris tout l'intérêt de la présente invention. Notamment, il aura saisi que l'on propose une mise en oeuvre de la décantation plus performante, amenant une diminution de la surface totale de décantation (à performance égale). Par ailleurs, dans la mesure où ladite décantation est mise en oeuvre dans deux compartiments ou unités séparés, on peut gérer plus facilement l'entretien du matériel. On peut ainsi prévoir une amélioration de l'accès au compartiment ou à l'unité demandant le plus d'entretien.

L'homme du métier aura également compris que dans le cadre de procédés de mélange-séparation, mis en oeuvre dans une batterie de mélangeurs-décanteurs, avec, de façon classique, circulation à contre-courant des deux liquides (lourd/léger ; généralement solution aqueuse/solvant organique), le procédé de l'invention trouve tout son intérêt. Il peut y être mis en oeuvre, de façon uniforme, au niveau de tous les décanteurs de ladite batterie. Il peut aussi y être judicieusement mis en oeuvre, de façon non uniforme, au niveau de tous lesdits décanteurs.

Le procédé de l'invention est particulièrement intéressant dans la mesure où il permet de choisir les débits spécifiques de chacun des deux compartiments d'un décanteur, voire de chacun des compartiments de décanteurs d'une batterie de mélangeur-décanteur, en vue d'optimiser la pureté recherchée de l'une ou l'autre des phases en circulation.

On se propose de décrire maintenant le second objet de la présente invention, à savoir, une installation de mélange-séparation de deux liquides, au sein de laquelle le procédé ci-dessus peut être mis en oeuvre. Une telle installation de mélange-séparation de deux liquides -non miscibles, présentant des densités différentes- est du type des mélangeurs-décanteurs de l'art antérieur. Elle comprend au moins un ensemble constitué par un mélangeur associé à un dispositif de décantation. Ledit mélangeur comporte des moyens pour son alimentation, généralement de façon séparée, en les deux liquides ; il est, par ailleurs, équipé de moyens d'agitation ; il est enfin relié au dispositif de décantation par une goulotte. Lors de la progression, dans ladite goulotte, de la dispersion (du mélange) générée dans le mélangeur, il s'opère au sein de celle-ci, une pré-décantation ou pré-séparation. Pour assurer une telle progression, on fait généralement intervenir des moyens de pompage. L'installation présentement revendiquée est du type des installations de l'art antérieur. Toutefois, de façon caractéristique, elle comporte des moyens pour récupérer séparément les fractions pré-décantées au sortir de la goulotte et son dispositif de décantation est agencé en deux unités ou compartiments séparés, pour le traitement (la décantation) séparé(e) des fractions récupérées, chaque unité ou compartiment étant pourvu de moyens de sortie séparés pour un flux principal et un flux secondaire.

La goulotte est agencée pour délivrer, séparément, les deux fractions pré-décantées (qui se sont pré-décantées en son sein) dans des volumes spécifiques de décantation.

Le dispositif de décantation de l'installation selon l'invention comprend, de façon caractéristique, deux unités ou compartiments séparés, alimentés respectivement en une fraction enrichie en liquide lourd (phase aqueuse, par exemple) et une fraction enrichie en liquide léger (phase organique, par exemple) ; fractions qui se sont constituées dans la goulotte reliant le mélangeur audit dispositif de décantation.

Selon une variante préférée de l'invention, le dispositif de décantation consiste en un décanteur compartimenté i.e. en la juxtaposition de deux compartiments décanteurs verticaux accolés sur leur longueur. Dans le cadre de cette variante préférée, la cloison qui sépare ledit décanteur en lesdits deux compartiments accolés peut être verticale ou inclinée sur au moins une partie de sa hauteur. On peut ainsi avoir des compartiments de géométrie différente. Chacun desdits compartiments a ses propres canaux d'alimentation, de décharge et son seuil d'interphase réglable, par exemple, à la sortie de la phase lourde. On a vu ci-dessus que la hauteur d'interphase dans chacun desdits compartiments peut ainsi être ajustée de manière indépendante. Dans les deux phrases précédentes, on peut évidemment lire "unités" en lieu et place de "compartiments".

Les moyens au sortir de la goulotte pour alimenter en les deux fractions pré-décantées (sans remise en contact de celles-ci), les deux volumes spécifiques de décantation peuvent exister selon différents modes de réalisation. On peut notamment prévoir, sur toute la largeur de la goulotte, en son extrémité d'alimentation du dispositif de décantation, deux caniveaux, décalés l'un par rapport à l'autre, l'un supérieur pour le transfert de la fraction pré-décantée enrichie en le liquide léger, l'autre inférieur pour le transfert de la fraction pré-décantée enrichie en le liquide lourd ; lesdits caniveaux déversant lesdites fractions pré-décantées par l'intermédiaire d'au moins un tuyau dans les volumes (unités ou compartiments) de décantation adéquats. Sur la largeur de chacun desdits caniveaux, on peut prévoir plusieurs tuyaux, espacés régulièrement... On peut également prévoir un seul caniveau "supérieur" pour le transfert de la fraction enrichie en le liquide léger et, pour le transfert de la fraction enrichie en le liquide lourd, des tuyaux débouchant directement sur le fond de la goulotte.

Ce mode de réalisation s'applique tout particulièrement aux installations du type à goulotte superposée, à courant de- liquide inversé, et à décanteur compartimenté. Au sortir des tuyaux, la fraction prélevée est dirigée vers l'un ou l'autre des compartiments. Elle peut y être dirigée au moyen d'un déflecteur. Celui-ci occupe la partie supérieure d'un compartiment et est avantageusement solidarisé, en son extrémité inférieure, à la paroi séparant en deux compartiments le décanteur.

Dans d'antres contextes, les tuyaux reliés auxdits caniveaux de la goulotte peuvent transporter chacune des fractions pré-décantées vers des unités de décantation totalement indépendantes.

On peut également concevoir des prélèvements des fractions pré-décantées, dans la goulotte, fortement décalés dans l'espace...

En fait, l'on conçoit aisément que l'installation de l'invention puisse exister selon de très nombreuses variantes. Quel que soit l'agencement du mélangeur-décanteur, il suffit de prévoir les moyens pour récupérer séparément les fractions pré-décantées et les unités ou compartiments de décantation adéquats pour traiter séparément lesdites fractions ainsi récupérées.

Avantageusement, comme déjà indiqué ci-dessus, lesdits moyens et volumes de décantation sont agencés dans une installation du type à goulotte superposée et à courant de liquide inversé. Lesdits volumes de décantation, unités totalement indépendantes ou compartiments solidarisés par une cloison, ont ou non le même volume et/ou la même géométrie. On a vu, plus haut dans le présent texte, l'intérêt que ceci pouvait présenter. Il est évident que cette caractéristique de l'installation (unités ou compartiments de décantation de même volume ou de volumes différents, de même géométrie ou de géométries différentes) est totalement indépendante du type de ladite installation.

On a vu que le perfectionnement selon la présente invention a été développé pour tirer au maximum profit de la pré-décantation qui s'opère lors du transfert du mélangeur vers le décanteur. La pré-décantation au sortir de la goulotte est d'autant plus poussée qu'elle s'est amorcée en amont de ladite goulotte, au niveau des moyens de pompage (lorsque de tels moyens interviennent).

Ainsi, selon une variante avantageuse, fait-on intervenir dans l'installation de l'invention, des moyens de pompage à faible turbulence au sein desquels s'amorce la pré-séparation des deux liquides constituant la dispersion pompée. De tels moyens de pompage, du type pompe à cône ont notamment été décrits, comme indiqué plus haut, dans la demande FR-A-2 343 905. Selon une variante préférée de l'invention, le mélangeur de l'installation comporte donc au-dessus des moyens d'agitation, une pompe élévatrice à faible turbulence du type constitué par un stator tronconique évasé vers le haut et un rotor à pales trapézoïdales ; ledit rotor étant calé sur l'arbre vertical rotatif desdits moyens d'agitation.

On a précisé ci-dessus les moyens constitutifs essentiels d'une installation de mélange-séparation selon l'invention, au sein de laquelle peut être mis en oeuvre le procédé de l'invention. Pour la mise en oeuvre des variantes avantageuses dudit procédé, variantes précédemment décrites, on fait intervenir -indépendamment et avantageusement ensemble-, au sein de ladite installation, des moyens complémentaires.

Ainsi est--il avantageux de prévoir au niveau de la goulotte (près de son extrémité d'alimentation du dispositif de décantation) des moyens pour régler le niveau de l'interphase en son sein. De tels moyens peuvent notamment consister en un barrage d'une hauteur ajustable h, barrage situé en aval du prélèvement de la fraction enrichie en le liquide léger. Un tel barrage assure un niveau d'interphase (fraction enrichie en le liquide lourd / fraction enrichie en le liquide léger) choisi pour limiter l'entraînement par la veine inférieure de la veine supérieure....

Ainsi est-il aussi avantageux de prévoir au niveau de chacun des compartiments ou unités de décantation du dispositif de décantation des moyens pour le réglage de la hauteur d'interphase en son sein. Lesdits moyens peuvent être localisés à l'intérieur dudit compartiment ou unité ou à l'extérieur de celui-ci, sur une canalisation de sortie. De tels moyens sont en eux-mêmes connus. A l'intérieur d'un volume de décantation, on peut trouver des moyens type barrage, localisés à proximité de la canalisation de sortie de la fraction très enrichie en le liquide lourd. A l'extérieur d'un volume de décantation, on peut trouver, sur la canalisation de sortie de la fraction très enrichie en le liquide lourd, des moyens de réglage de la hauteur de l'interphase du type de ceux décrits dans le brevet DE-A-2 710 241 (ou US-A-4, 235, 602) (schématisé sur la figure 1 annexée sous la référence 12). IIs consistent principalement en un cylindre à l'intérieur duquel se déplace de manière étanche un piston prolongé par une cheminée centrale formant déversoir à sa partie supérieure... Il est évidemment avantageux de faire intervenir de tels moyens - identiques ou différents- dans chacun desdits compartiments ou unités de décantation. Toutefois, ceci ne constitue qu'un plus et il n'est par ailleurs nullement exclu du cadre de l'invention de ne faire intervenir de tels moyens que dans un seul desdits compartiments ou unités de décantation. On insistera sur le fait que de tels moyens, utilisés dans le cadre de la présente invention, autorisent un réglage d'interphase au sein d'un compartiment ou unité de décantation totalement indépendant de celui mis en oeuvre dans l'autre compartiment ou unité de décantation...

De la même façon, on prévoit avantageusement:
- dans le compartiment ou unité de décantation où a été orientée la fraction pré-décantée, enrichie en liquide lourd -compartiment ou unité dans lequel se trouve une veine inférieure épaisse-, des moyens pour mettre en oeuvre une flottation par bullage de gaz (air ou gaz inerte, par exemple). Auxdits moyens on associe avantageusement, en aval, des moyens pour récolter les crasses entraînées par ladite flottation. On peut également prévoir, en aval, desdits moyens pour la mise en oeuvre de la flottation et la récolte des crasses, un coalesceur (qui ne sera ainsi pas encrassé). L'opportunité de l'intervention d'un tel coalesceur relève du jugement de l'homme du métier. La flottation peut rendre ladite intervention totalement superflue...
- dans l'un et/ou l'autre des compartiments ou unités de décantation, des moyens pour promouvoir, au sein de la veine épaisse (constituée par la phase majoritaire) la coalescence. Lesdits moyens sont évidemment adaptés à la phase dans laquelle ils interviennent. Ils présentent des caractéristiques tensioactives adaptées à la nature de la phase minoritaire que l'on souhaite éliminer de la phase majoritaire. On a vu ci-dessus que l'intervention de tels moyens pouvait se révéler superflue, dans une veine épaisse enrichie en liquide lourd au sein de laquelle on aurait mis en oeuvre un bullage. Elle n'est toutefois, dans ce contexte, nullement exclue... et, en tout état de cause, fort avantageuse dans une telle veine (épaisse, de liquide lourd) au sein de laquelle aucun bullage n'est mis en oeuvre.

On peut ainsi améliorer la séparation liquide lourd/liquide léger (par décantation) au sein de chaque compartiment ou unité du dispositif de décantation.

On notera qu'à la sortie de chacun des compartiments ou unités du dispositif de décantation selon l'invention, on récupère un flux principal et un flux secondaire, de plus petit débit que le flux principal.

Selon la qualité du flux secondaire et les spécifications du procédé, ledit flux secondaire d'un compartiment ou d'une unité pourra avantageusement, en tout ou partie :
- soit rejoindre le flux principal de l'autre compartiment ou unité (à condition que les entraînements soient compatibles) ;
- soit être recyclé vers le mélangeur ;
- soit être expédié à l'extérieur du circuit pour traitement spécifique.

On notera incidemment ici, que, d'une manière générale, pour un bon déroulement du procédé, il convient toujours d'avoir au sein d'un compartiment ou unité de décantation, une certaine quantité de phase secondaire. L'homme du métier saura dimensionner l'installation, calculer les débits... pour une optimisation du résultat escompté.

On a, enfin, vu que l'installation de mélange-séparation selon l'invention comporte au moins un ensemble constitué par l'association d'un mélangeur et d'un dispositif de décantation, reliés par une goulotte (ou tout moyen équivalent). Généralement, elle en comporte au moins une batterie. On notera qu'au sein de ladite batterie les unités ou compartiments de décantation ne présentent pas forcément le même volume et/ou la même géométrie; ceci, à l'échelle de tous les dispositifs de décantation de la batterie mais aussi à l'échelle d'un dispositif de décantation de ladite batterie. On a vu, en effet, plus haut dans le présent texte, l'intérêt qu'il pouvait y avoir à mettre en oeuvre la décantation des fractions pré-décantées au sortir d'une même goulotte dans des unités ou compartiments de décantation de volumes et/ou géométries différents.

Les figures annexées illustrent le contexte de la présente invention et ladite invention, elle-même.

La figure 1 est une coupe verticale schématique d'un mélangeur-décanteur de l'art antérieur.

La figure 2 illustre de façon schématique les procédé et installation de mélange-séparation selon l'invention (variante avantageuse).

La figure 3 est une coupe longitudinale schématique d'une partie d'une installation selon l'invention -du type à courant de liquide inversé et à goulotte superposée- ; en fait, de l'extrémité d'alimentation, par la goulotte, du dispositif de décantation.

La figure 4 est une coupe transversale, selon IV-IV, schématique de ladite partie (extrémité d'alimentation) de ladite installation selon l'invention.

La figure 5 est une coupe transversale, selon V-V, schématique de ladite partie (extrémité d'alimentation) de ladite installation selon l'invention.

La figure 1 a été décrite dans la partie introductive de la présente description. Elle schématise un mélangeur-décanteur de l'art antérieur du type à courant de liquide inversé et à goulotte superposée.

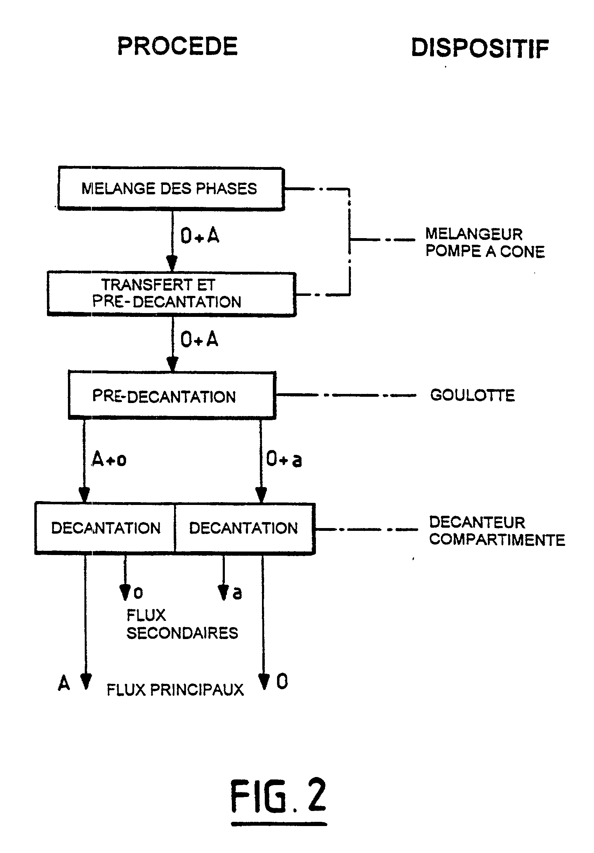

La figure 2 parle d'elle-même. Elle présente un "flow-sheet" du procédé de l'invention et illustre une variante préférée de sa mise en oeuvre dans un dispositif du type de celui illustré sur la figure 1 (mélangeur-pompe à cône / goulotte superposée / décanteur, alimentée par son extrémité la plus éloignée), mais comportant, de façon caractéristique un décanteur compartimenté et des moyens pour alimenter chacun des compartiments dudit décanteur en les fractions pré-décantées dans la goulotte.

On a représenté par O (ou o), une phase organique et par A (ou a), une phase aqueuse.

Elles sont préalablement mélangées (A + O). Après la pré-décantation (mise en oeuvre dans la pompe et la goulotte), on récupère, au sortir de la goulotte, les deux fractions pré-décantées : (A + o) et (O + a). De façon caractéristique, on récupère lesdites fractions séparément et on les traite séparément dans les deux compartiments du décanteur. A la sortie dudit décanteur compartimenté, on récupère séparément, quatre flux :
- une phase aqueuse principale : A,
- une phase organique secondaire : o,
lesdites deux phases étant issues du compartiment qui a traité la fraction (A + o) enrichie en eau;
- une phase organique principale : O,
- une phase aqueuse secondaire : a,
lesdites deux phases étant issues du compartiment qui a traité la fraction (O + a) enrichie en solvant organique.

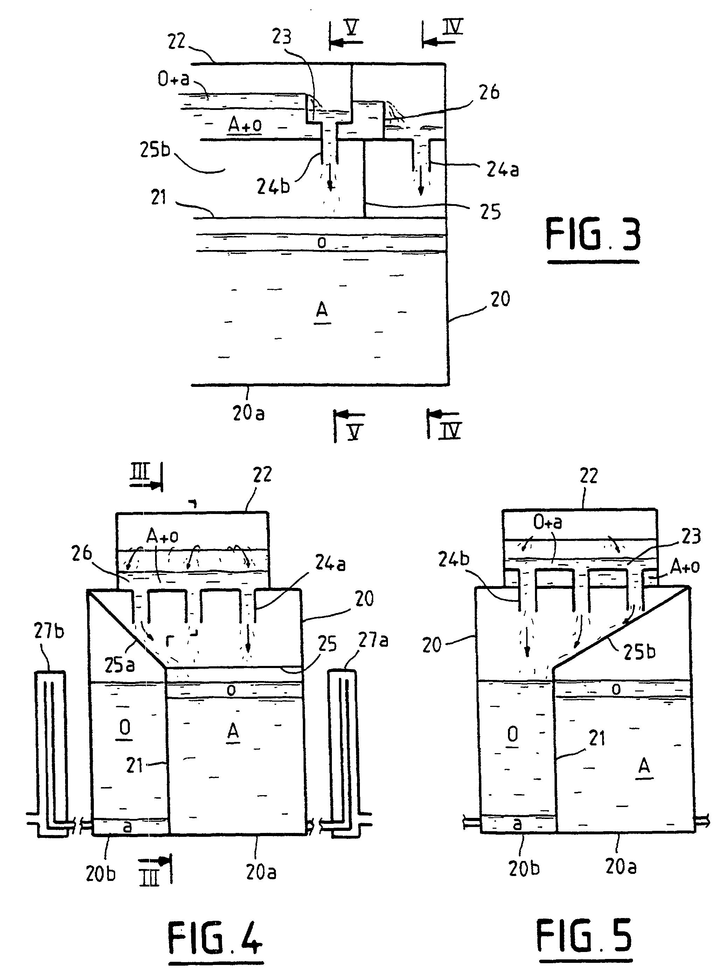

Sur les figures 3 à 5, on a schématisé :
- en 20, le décanteur compartimenté ; en 20a, le compartiment dudit décanteur 20 dans lequel s'écoule la fraction pré-décantée (A + o) enrichie en phase aqueuse ; en 20b, le compartiment dudit décanteur 20 dans lequel s'écoule la fraction pré-décantée (O + a) enrichie en phase organique ;
- en 21, la cloison séparant ledit décanteur 20 en lesdits deux compartiments 20a et 20b ;
- en 22, la goulotte superposée.

A l'extrémité de ladite goulotte 22, on trouve les moyens pour transférer séparément les fractions pré-décantées (A + o) et (O + a). La fraction (O + a) est transférée, par le caniveau 23 et les tuyaux associés 24b, dans le compartiment 20b. La fraction (A + o) est transférée par les tuyaux 24a, dans le compartiment 20a. Les transferts sont "facilités" grâce à l'intervention de plaques déflectrices 25a et 25b, et d'une plaque de séparation 25.

On a enfin représenté :
- en 26, un barrage disposé dans la goulotte 22 pour régler, au sein de celle-ci, le niveau de l'interphase (A + o) / (O + a) (entre les fractions pré-décantées) ;
- en 27a et 27b des moyens pour le réglage du niveau des interphases A/o et O/a dans chacun des compartiments 20a et 20b. Lesdits moyens 27a et 27b sont situés à l'extérieur desdits compartiments 20a et 20b, sur les canalisations de sortie des phases aqueuses grimaire A et secondaire a. Lesdites canalisations sont prévues à l'extrémité opposée du décanteur 20 (extrémité opposée à son extrémité d'alimentation par la goulotte 22).

Lesdites figures 3 à 5 illustrent le principe de base de la présente invention. Selon celui-ci, on raccorde chaque sortie aqueuse (exemple de liquide lourd) et organique (exemple de liquide léger) de la goulotte à un compartiment spécifique de décantation. Ainsi, les phases aqueuses et organiques pré-séparées dans la pompe à cône (avantageusement) et la goulotte ne sont pas remises en contact et de ce fait ne sont pas remélangées. On est ainsi en présence d'un compartiment 20a alimenté essentiellement par de la phase aqueuse (A + o) et d'un autre compartiment 20b alimenté essentiellement par de la phase organique (O + a).

## Revendications

1. Procédé de mélange-séparation de deux liquides (A,O) non miscibles, présentant des densités différentes ; ledit procédé comprenant :
- l'alimentation d'un mélangeur en lesdits deux liquides (A,O), pour son remplissage jusqu'à un niveau donné ;
- l'agitation, dans ledit mélangeur, de façon à produire une dispersion desdits deux liquides ;
- l'acheminement de ladite dispersion vers un dispositif de décantation ; ledit acheminement étant mis en oeuvre dans des conditions où il s'opère une pré-décantation ou pré-séparation de ladite dispersion en deux fractions (A+o, O+a), enrichies respectivement en l'un et l'autre desdits deux liquides ;
- la séparation desdits deux liquides, au sein dudit dispositif de décantation ; ledit procédé étant **caractérisé en ce que** lesdites fractions pré-décantées (A+o,O+a) sont récupérées séparément et traitées séparément, indépendamment l'une de l'autre, au sein dudit dispositif de décantation, de manière à générer, au sein dudit dispositif, deux phases principales (A,O) et deux phases secondaires (a,o).

2. Procédé selon la revendication 1, **caractérisé en ce que** lesdites fractions pré-décantées sont traitées chacune dans des unités ou compartiments de décantation ne présentant pas le même volume et/ou la même géométrie.

3. Procédé selon l'une des revendications 1 ou 2, **caractérisé en ce que** les traitements séparés desdites fractions pré-décantées sont mis en oeuvre avec des réglages indépendants de la hauteur d'interphase.

4. Procédé selon l'une quelconque des revendications 1 à 3, **caractérisé en ce que** le traitement de la fraction enrichie en le liquide lourd comprend une flottation par bullage de gaz au sein de la phase lourde et avantageusement, en aval de ladite flottation, une collecte des crasses.

5. Procédé selon l'une quelconque des revendications 1 à 4, **caractérisé en ce que** le traitement de la fraction enrichie en le liquide lourd ou (et) le traitement de la fraction enrichie en le liquide léger est (sont) mis en oeuvre avec un promoteur de coalescence adapté, disposé au sein de la phase majoritaire.

6. Procédé selon l'une quelconque des revendications 1 à 5, **caractérisé en ce qu'**il est mis en oeuvre dans une batterie de mélangeurs-décanteurs, avec circulation, à contre-courant, desdits deux liquides.

7. Installation de mélange-séparation de deux liquides (A, O) non miscibles, présentant des densités différentes; ladite installation comprenant au moins un ensemble constitué par un mélangeur associé à un dispositif de décantation (20) ; ledit mélangeur comportant des moyens pour son alimentation en lesdits deux liquides (A, O), étant équipé de moyens d'agitation et étant relié audit dispositif de décantation (20) par une goulotte (22) au sein de laquelle s'opère une pré-décantation ou pré-séparation de la dispersion acheminée dudit mélangeur vers ledit dispositif de décantation (20); ladite installation étant **caractérisée en ce qu'**elle comporte en outre des moyens (23, 24b, 24a) pour la récupération séparée des fractions pré-décantées (A + o, O + a) au sortir de ladite goulotte (22) et **en ce que** ledit dispositif de décantation (20) est agencé, en deux unités ou compartiments séparés (20a et 20b), pour traiter séparément lesdites fractions récupérées (A+o, O+a) ; chaque unité ou compartiment (20a,20b) étant pourvu de moyens de sortie séparés pour un flux principal (A ou O) et un flux secondaire (a ou o).

8. Installation selon la revendication 7, du type à goulotte superposée et à courant de liquide inversé.

9. Installation selon l'une des revendications 7 ou 8, **caractérisée en ce que** ledit mélangeur comporte en outre des moyens de pompage, alimentant ladite goulotte (22); lesdits moyens de pompage consistant avantageusement en une pompe élévatrice à liquide à faible turbulence, située au-dessus desdits moyens d'agitation, du type constitué par un stator tronconique évasé vers le haut et un rotor à pales trapézoïdales; ledit rotor de ladite pompe étant calé sur l'arbre vertical rotatif desdits moyens d'agitation.

10. Installation selon l'une quelconque des revendications 7 à 9, **caractérisée en ce que** les unités ou compartiments séparés (20a et 20b) dudit dispositif de décantation (20) ne présentent pas le même volume et/ou la même géométrie.

11. Installation selon l'une quelconque des revendications 7 à 10, **caractérisée en ce qu'**elle comporte en outre, au niveau de l'extrémité de ladite goulotte (22) alimentant ledit dispositif de décantation (20), des moyens (26) pour régler le niveau de l'interphase entre lesdites fractions pré-décantées (A + o, O + a) dans ladite goulotte (22).

12. Installation selon l'une quelconque des revendications 7 à 11, **caractérisée en ce que** chaque unité ou compartiment (20a, 20b) dudit dispositif de décantation (20) comporte, en son sein ou sur une de ses canalisations de sortie, des moyens (27a, 27b) pour le réglage de la hauteur d'interphase en son sein.

13. Installation selon l'une quelconque des revendications 7 à 12, **caractérisée en ce que** l'un desdits unités ou compartiments (20a) dudit dispositif de décantation (20) est équipé de moyens pour mettre en oeuvre une flottation par bullage; et avantageusement de moyens, disposés en aval desdits moyens de flottation, pour récolter les crasses entraînées.

14. Installation selon l'une quelconque des revendications 7 à 13, **caractérisée en ce qu'**au moins l'un desdits unités ou compartiments (20a et/ou 20b) dudit dispositif de décantation (20) est équipé de moyens pour promouvoir la coalescence; lesdits moyens étant agencés pour agir au sein de la phase majoritaire.

15. Installation selon l'une quelconque des revendications 7 à 14, comportant au moins une batterie de mélangeurs-décanteurs, **caractérisée en ce que** tous les compartiments ou unités de décantation des décanteurs de ladite batterie ne présentent pas le même volume et/ou la même géométrie.

## Patentansprüche

1. Verfahren zur Mischungstrennung von zwei nicht mischbaren Flüssigkeiten (A, O), welche unterschiedliche Dichten aufweisen, wobei besagtes Verfahren umfasst:
- Beschickung eines Mischers mit besagten zwei Flüssigkeiten (A, O), um ihn bis zu einem gegebenen Niveau aufzufüllen;
- Rühren in besagtem Mischer, so dass einc Dispersion besagter zweier Flüssigkeiten produziert wird;
- Weiterleitung besagter Dispersion in eine Vorrichtung zum Dekantieren; besagte Weiterleitung macht von Bedingungen Gebrauch, in denen ein Vordekantieren oder eine Vortrennung besagter Dispersion in zwei Fraktionen (A + o, O + a) stattfindet, jeweils angereichert mit der einen oder der anderen der besagten beiden Flüssigkeiten;
- Trennung besagter zweier Flüssigkeiten innerhalb der Vorrichtung zum Dekantieren; besagter Prozess ist dadurch charakterisiert, dass die besagten vordekantierten Fraktionen (A + o, O + a) innerhalb der Vorrichtung zum Dekantieren getrennt abgeschieden werden und getrennt behandelt werden, unabhängig voneinander, so dass innerhalb der besagten Vorrichtung zwei Hauptphasen (A, O) und zwei Sekundärphasen (a, o) erzeugt werden.

2. Verfahren nach Anspruch 1, **dadurch gekennzeichnet, dass** jede der besagten vordekantierten Fraktionen in Einheiten oder Kompartimenten zum Dekantieren behandelt werden, welche nicht das gleiche Volumen und/oder die gleiche Geometrie aufweisen.

3. Verfahren gemäß einem der Ansprüche 1 oder 2, **dadurch gekennzeichnet, dass** die getrennten Behandlungen besagter vordekantiertcr Fraktionen mit Einstellungen ausgeführt werden, die unabhängig von der Höhe der Phasengrenzfäche sind.

4. Verfahren gemäß einem der Ansprüche 1 bis 3, **dadurch gekennzeichnet, dass** die Behandlung der mit der schweren Flüssigkeit angereicherten Fraktion eine Flotation mittels Durchperlen von Gas innerhalb der schweren Phase und vorteilhafterweise stromabwärts besagter Flotation eine Sammelvorrichtung für Rückstände umfasst.

5. Verfahren gemäß einem der Ansprüche 1 bis 4, **dadurch gekennzeichnet, dass** die Behandlung der mit der schweren Flüssigkeit angereicherten Fraktion oder (und) die Behandlang der mit der leichten Flüssigkeit angereichterten Fraktion mit einem passenden Promoter zur Tropfenbildung, der in die Hauptphase gegeben wird, ausgeführt wird (werden).

6. Verfahren gemäß einem der Ansprüche 1 bis 5, **dadurch gekennzeichnet, dass** es beim Fließen besagter zweier Flüssigkeiten im Gegenstrom von einer Batterie von Mischern/Dekantierern Gebrauch macht.

7. Anlage zur Mischungstrennung von zwei nicht mischbaren Flüssigkeiten (A, O), die unterschiedliche Dichten aufweisen; besagte Anlage umfasst wenigstens ein Ensemble gebildet aus einem Mischer, der mit einer Vorrichtung zu Dekantieren (20) assoziiert ist; besagter Mischer umfasst Mittel für seine Beschickung mit besagten zwei Flüssigkeit (A, O), wobei er mit Mitteln zum Rühren ausgestattet ist, und mit besagter Vorrichtung zum Dekantieren (20) über eine Förderrinne (22), innerhalb derer ein Vordekantieren oder Vortrennen der beförderten Dispersion besagter Mischung in Richtung auf besagte Vorrichtung zum Dekantieren (20) stattfindet; besagte Anlage ist **dadurch gekennzeichnet, dass** sie außerdem Mittel (23, 24b, 24a) für die getrennte Abscheidung der vordekantierten Fraktionen (A + o, O + a) am Ende besagter Förderrinne (22) enthält, wobei besagte Vorrichtung zum Dekantieren (20) in zwei getrennten Einheitcn oder Kompartimenten (20a und 20b) angeordnet ist, um besagte abgeschiedene Fraktionen (A + o, O + a) getrennt zu behandeln; jede Einheit oder Kompartiment (20a, 20b) ist mit getrennten Mitteln für den Auslauf eines Hauptstromes (A oder O) und eines Sekundärstromes (a oder o) versehen.

8. Anlage gemäß dem Anspruch 7, mit einer übereinanderliegenden Förderrinne und einem invcrsen Flüssigkeitsstrom.

9. Anlage gemäß einem der Ansprüche 7 oder 8, **dadurch gekennzeichnet, dass** besagter Mischer außerdem Mittel zum Pumpen enthält, um besagte Förderrinne (22) zu beschicken; besagte Mittel zum Pumpen bestehen vorteilhafterweise aus einer Flüssigkeitshebepumpe mit leichter Turbulenz, die oberhalb besagter Rührmittel angebracht ist, eines Typs gebildet aus einem nach oben sich kegelstumpfartig verbreiternden Stator und einem Rotor mit trapezförmigen Blättern; besager Rotor von besagter Pumpe ist an einer vertikalen Rührwelle besagter Rührmittel festgemacht ist.

10. Anlage gemäß eines der Ansprüche 7 bis 9, **dadurch gekennzeichnet, dass** die getrennten Einheiten oder Kompartimente (20a und 20b) der besagten Vorrichtung zum Dekantieren (20) nicht dasselbe Volumen und/oder dieselbe Geometrie aufweisen.

11. Anlage gemäß einem der Ansprüche 7 bis 10, **dadurch gekennzeichnet, dass** sie außerdem auf der Höhe des äußersten Endes besagter Förderrinne (22), die besagte Vorrichtung zum Dekantieren (20) beschickt, Mittel (26) zum Regeln des Niveaus der Phasengrenzfläche zwischen den besagten vordekantierten Fraktionen (A + o, O + a) in besagter Förderrinne (22) enthält.

12. Anlage gemäß einem der Ansprüche 7 bis 11, dadurch gekennzeichent, dass jede Einheit oder Kompartiment (20a, 20b) der besagten Vorrichtung zum Dekantieren (20) innerhalb sich selbst oder auf einer der Ausgangsleitungen Mittel (27a, 27b) für die Regelung der Höhe der Phasengrenzfläche innerhalb sich selbst enthält.

13. Anlage nach einem der Ansprüche 7 bis 12, **dadurch gekennzeichnet, dass** eine der besagten Einheiten oder Kompartimente (20a) der besagten Vorrichtung zum Dekantieren (20) mit Mitteln zum Anwenden einer Flotation mittels Durchperlen ausgerüstet ist; und vorteilhafterweise Mittel, die stromabwärts der besagten Mittel zur Flottation angeordnet sind, um mitgeführte Rückstände zu sammeln.

14. Anlage gemäß einem der Ansprüche 7 bis 13, **dadurch gekennzeichnet, dass** wenigstens cine der besagten Einheiten oder Kompartimente (20a und/oder 20b) der besagen Vorrichtung zum Dekantieren (20) mit Mitteln, um die Tropfenbildung zu initiieren, ausgestattet ist; besagte Mittel sind so angeordnet, dass sie innerhalb der Hauptphase agicren.

15. Anlagc gemäß einem der Ansprüche 7 bis 14, umfassend wenigstens eine Batterie von Mischern/Dekantierern, **dadurch gekennzeichnet, dass** alle Kompartimente oder Einbeiten zum Dekantieren der Dekantierer besagter Batterie nicht das gleiche Volumen und/oder die gleiche Geometrie aufweisen.

## Claims

1. Method for mixing-separating two non-miscible liquids (A, O), presenting different densities; said method comprising:
• supplying a mixer with said two liquids (A, O) in order to fill it up to a given level;
• agitation in said mixer so as to produce a dispersion of said two liquids;
• routing of said dispersion towards a decantation device; said routing being implemented in conditions where there takes place a pre-decantation or pre-separation of said dispersion into two fractions (A+o, O+a), which are enriched respectively in one or other of said two liquids;
• separation of said two liquids within said decantation device; said method being **characterised in that** said pre-decanted fractions (A+o, O+a) are recovered separately and treated separately, independently of each other, within said decantation device so as to generate within said device two principal phases (A, O) and two secondary phases (a, o).

2. Method according to claim 1, **characterised in that** said pre-decanted fractions are each treated in units or compartments for decantation which do not present the volume and/or the same geometry.

3. Method according to one of the claims 1 or 2, **characterised in that** the separate treatments of said pre-decanted fractions are implemented with independent adjustments of the interphase level.

4. Method according to any of the claims 1 to 3, **characterised in that** the treatment of the fraction enriched with the heavy liquid comprises a gas bubbling flotation within the heavy phase and advantageously, downstream from said flotation, a collection of the dirt.

5. Method according to any of the claims 1 to 4, **characterised in that** the treatment of the fraction enriched with heavy liquid or (and) the treatment of the fraction enriched with light liquid is (are) implemented with an adapted coalescence promoter which is disposed within the main phase.

6. Method according to any of the claims 1 to 5, **characterised in that** it is implemented in a battery of mixers-decanters, with circulation, in counterflow, of said two liquids.

7. Apparatus for mixing-separating two non-miscible liquids (A, O), presenting different densities; said apparatus comprising at least one assembly formed by a mixer associated with a decantation device (20); said mixer comprising means for its supply of said two liquids (A, O), being equipped with agitation means and being connected to said decantation device (20) by a chute (22) within which there takes place a pre-decantation or pre-separation of the routed dispersion of said mixer towards said decantation device (20); said apparatus being **characterised in that** it comprises in addition means (23, 24b, 24a) for separate recovery of the pre-decanted fractions (A + o, O + a) at the end of said chute (22) and **in that** said decantation device (20) is configured, in two separate units or compartments (20a and 20b), in order to treat separately said recovered fractions (A + o, O+a); each unit or compartment (20a, 20b) being provided with separate exit means for a principal flux (A or O) and a secondary flux (a or o).

8. Apparatus according to claim 7, of the superposed chute type and with a reverse current of liquid.

9. , Apparatus according to one of the claims 7 or 8, **characterised in that** said mixer comprises moreover pumping means, supplying said chute (22); said pumping means comprising advantageously a pump for raising liquid to a weak turbulence, situated above said agitation means, of the type formed by a truncated stator, which opens out towards the top, and by a rotor with trapezoidal blades; said rotor of said pump being fixed on the vertical rotary shaft of said agitation means.

10. Apparatus according to any of the claims 7 to 9, **characterised in that** the separate units or compartments (20a and 20b) of said decantation device (20) do not present the same volume and/or the same geometry.

11. Apparatus according to any of the claims 7 to 10, **characterised in that** it comprises in addition, at the level of the end of said chute (22) which supplies said decantation device (20), means (26) for adjusting the level of the interface between said pre-decanted fractions (A+o, O+a) in said chute (22).

12. Apparatus according to any of the claims 7 to 11, **characterised in that** each unit or compartment (20a, 20b) of said decantation device (20) comprises, within it or on one of its exit ducts, means (27a, 27b) for adjusting the interface level within it.

13. Apparatus according to any of the claims 7 to 12, **characterised in that** one of said units or compartments (20a) of said decantation device (20) is equipped with means for implementing a bubbling flotation; and advantageously means, which are disposed downstream of said flotation means, for gathering any entrained dirt.

14. Apparatus according to any of the claims 7 to 13, **characterised in that** at least one of said units or compartments (20a and/or 20b) of said decantation device (20) is equipped with means for promoting coalescence; said means being configured in order to act within the main phase.

15. Apparatus according to any of the claims 7 to 14, comprising at least a battery of mixers/decanters, **characterised in that** all the decantation compartments or units of the decanters of said battery do not present the same volume and/or the same geometry.
